# EUROPÄISCHE PATENTANMELDUNG

(11) **EP 4 124 781 A1**
(43) Veröffentlichungstag der Anmeldung: **01.02.2023**
(21) Anmeldenummer: 21187610.7
(22) Anmeldetag: 26.07.2021
(51) Int. Cl.: F16H 57/04

(54) **BAURAUMSPARENDE GETRIEBEKÜHLEINRICHTUNG UND GETRIEBE**

(71) Anmelder: Flender GmbH, 46395 Bocholt (DE)
(72) Erfinder: Dinter, Ralf Martin, 45888 Gelsenkirchen (DE)
(74) Vertreter: Michalski Hüttermann & Partner Patentanwälte mbB

(57) **Zusammenfassung**

Es ist eine Getriebekühleinrichtung (35) vorgesehen mit einem Getriebegehäuseteil (30) zum Einhausen rotierender Getriebeelemente und einem mit dem Getriebegehäuseteil (30) verbundenen Lüfter (34) zum Anströmen eines Kühlluftstroms (48) an eine Außenseite (32) des Getriebegehäuseteils (30), wobei der Lüfter (34) ein mit einem hohlen Lüfterring (40) kommunizierendes Förderelement (36) zur Erzeugung einer Betriebsströmung innerhalb des Lüfterrings (40) aufweist, wobei der Lüfterring (40) über mindestens eine Ausstoßöffnung (46) mit einem radial innerhalb des Lüfterrings (40) vorgesehenen Volumen derart kommuniziert, dass die Betriebsströmung den Kühlluftstrom (48) über einen Saugstrahleffekt erzeugt. Durch die indirekte Erzeugung des Kühlluftstroms (48) mit Hilfe der durch das Förderelement (36) in dem hohlen Lüfterring (40) erzeugten Betriebsströmung kann bei einem großen Strömungsquerschnitt des Kühlluftstroms (48) bei einem geringen Bauraumbedarf eine gute Kühlung erreicht werden, so dass eine bauraumsparende Kühlung eines Getriebes (18) ermöglicht ist.

## Beschreibung

Die Erfindung betrifft eine Getriebekühleinrichtung, mit deren Hilfe ein Getriebe bauraumsparend gekühlt werden kann, sowie ein Getriebe mit einer derartigen Getriebekühleinrichtung.

Aus WO 2011/071 042 A1 ist ein mit einer Eingangswelle verbundener Lüfter zur Kühlung eines Getriebes bekannt.

Es besteht ein ständiges Bedürfnis die Kühlung eines Getriebes möglichst bauraumsparend zu realisieren.

Es ist die Aufgabe der Erfindung Maßnahmen aufzuzeigen, die eine bauraumsparende Kühlung eines Getriebes ermöglichen.

Die Lösung der Aufgabe erfolgt durch eine Getriebekühleinrichtung mit den Merkmalen des Anspruchs 1 sowie ein Getriebe mit den Merkmalen des Anspruchs 11. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Getriebekühleinrichtung mit einem Getriebegehäuseteil zum Einhausen rotierender Getriebeelemente und einem mit dem Getriebegehäuseteil verbundenen Lüfter zum Anströmen eines Kühlluftstroms an eine Außenseite des Getriebegehäuseteils, wobei der Lüfter ein mit einem hohlen Lüfterring kommunizierendes Förderelement zur Erzeugung einer Betriebsströmung innerhalb des Lüfterrings aufweist, wobei der Lüfterring über mindestens eine Ausstoßöffnung mit einem radial innerhalb des Lüfterrings vorgesehenen Volumen derart kommuniziert, dass die Betriebsströmung den Kühlluftstrom über einen Saugstrahleffekt erzeugt, wobei insbesondere ein Volumenstrom des Kühlluftstroms zumindest durch einen Volumenstrom der Betriebsströmung und einem Volumenstrom der von der Betriebsströmung durch den Saugstrahleffekt mitgerissenen Umgebungsluft zusammengesetzt ist.

Der zur Kühlung eines Getriebes auf die Außenseite des Getriebegehäuseteils auftreffende Kühlluftstrom setzt sich zusammen aus dem von dem Förderelement angesaugten Luftstrom, der innerhalb des Lüfterrings die Betriebsströmung ausbildet, und denjenigen Luftstrom, der von dem über die Ausstoßöffnung abgegebenen Anteil der Betriebsströmung durch den Saugstrahleffekt mitgerissen wird. Der Volumenstrom des Kühlluftstrom ist dadurch größer als der von dem Förderelement angesaugten Luftstrom, so dass im Vergleich zu einer direkten Anströmung der Außenseite des Getriebegehäuseteils mit dem vom Förderelement angesaugten Luftstrom durch die indirekte Anströmung der zu kühlenden Außenseite mit dem aus der Summe der ausgestoßenen Betriebsströmung und der am Lüfterring mitgerissenen Umgebungsluft zusammengesetzten Kühlluftstrom sich eine deutlich höhere Kühlleistung ergibt. Zudem ist es möglich, das Förderelement beabstandet zu dem Lüfterring und der zu kühlenden Außenseite des Getriebegehäuseteils zu positionieren und die von dem Förderelement angesaugte Luft über mindestens einen Verbindungskanal zum Lüfterring zu leiten. Das Förderelement braucht dadurch nicht in dem Strömungsweg des Kühlluftstroms positioniert sein. Das Förderelement kann dadurch in einen weniger bauraumkritischen Bauraum verlagert werden, wo das Förderelement nicht an anderen Einbauten anstoßen kann. Durch die indirekte Erzeugung des Kühlluftstroms mit Hilfe der durch das Förderelement in dem hohlen Lüfterring erzeugten Betriebsströmung kann bei einem großen Strömungsquerschnitt des Kühlluftstroms bei einem geringen Bauraumbedarf eine gute Kühlung erreicht werden, so dass eine bauraumsparende Kühlung eines Getriebes ermöglicht ist.

Das Förderelement kann leicht in einem Bauraum angeordnet werden, wo eine gute Luftzufuhr und/oder Luftabfuhr bei einer möglichst geringen Temperatur erreicht werden kann. Vorzugsweise kann mindestens ein Verbindungskanal zwischen dem Förderelement und dem Lüfterring an dem Getriebegehäuseteil und/oder einem weiteren Getriebegehäuseteil entlanggeführt werden, so dass über die in dem Verbindungskanal von dem Förderelement geförderte Luft eine zusätzliche konvektive Kühlung erfolgen kann. Das Förderelement kann elektrisch und/oder mechanisch angetrieben sein. Beispielsweise ist das Förderelement Teil eines mit dem Lüfterring kommunizierenden Radial- und/oder Axiallüfters. Es ist auch möglich mehr als ein Förderelement vorzusehen, die in Reihe und/oder parallel zueinander mit dem Lüfterring kommunizieren.

Der Lüfterring kann rund, insbesondere kreisringförmig, elliptisch, mit veränderlichem Radius oder eckig, beispielsweise viereckig, ausgestaltet sein. Der Lüfterring kann eine zum Kühlluftstrom weisende, insbesondere in Umfangsrichtung geschlossene, innere Mantelfläche und eine in die entgegengesetzte Radialrichtung nach außen weisende äußere Mantelfläche aufweisen. Die innere Mantelfläche und die äußere Mantelfläche können über Stirnseiten miteinander verbunden sein, wobei vorzugsweise Übergänge zwischen der jeweiligen Mantelfläche und der jeweiligen Stirnseite strömungstechnisch angepasst, insbesondere gerundet, ausgestaltet sind, insbesondere um einen möglichst geringen Strömungswiderstand für zum Kühlluftstrom beitragender angesaugter Luft zu bieten. Unter einer axialen Richtung wird eine Axialrichtung verstanden, wenn der Lüfterring kreisringförmig ausgestaltet wäre, unabhängig davon ob der Lüfterring tatsächlich kreisringförmig ausgestaltet ist. Die Axialrichtung entspricht im Wesentlichen der Strömungsrichtung des Kühlluftstroms beim Passieren des Lüfterrings. Unter einer Radialrichtung wird eine Richtung innerhalb einer senkrecht zur Axialrichtung aufgespannten Ebene verstanden. Unter einer Umfangsrichtung des Lüfterrings wird eine Richtung entlang der ringförmigen Erstreckung des Lüfterrings verstanden, wobei die Umfangsrichtung bei einer kreisringförmigen Ausgestaltung des Lüfterrings einen konstanten Abstand zu einem mit der Axialrichtung zusammenfallenden Mittelpunkt aufweist.

Der Lüfterring ist hohl ausgeführt und weist ein in Umfangsrichtung des Lüfterrings verlaufenden Innenraum auf, in dem die Betriebsströmung ausgebildet werden kann. Der Innenraum des Lüfterrings kann insbesondere in Umfangsrichtung des Lüfterrings ringförmig geschlossen ausgestaltet sein. Der Lüfterring kann mindestens einen Durchlass aufweisen, über den das Förderelement mit dem Innenraum kommunizieren kann. Der Innenraum weist insbesondere in Umfangsrichtung des Lüfterrings zumindest über einen Großteil seiner Erstreckung in Umfangsrichtung einen im Wesentlichen konstanten Strömungsquerschnitt auf. Alternativ kann sich der Strömungsquerschnitt in Umfangsrichtung entlang der Strömungsrichtung der Betriebsströmung verjüngen, vorzugsweise derart, dass unter Berücksichtigung des über die Ausstoßöffnung austretenden Anteils der Betriebsströmung für den in Umfangsrichtung entlang der Strömungsrichtung der Betriebsströmung strömenden Anteil der Betriebsströmung im Wesentlichen konstante Strömungsverhältnisse, insbesondere eine im Wesentliche konstante Strömungsgeschwindigkeit der Betriebsströmung in Umfangsrichtung, erhalten bleiben. Vorzugsweise ist der Strömungsquerschnitt des Innenraums derart in Umfangsrichtung gestaltet, dass sich zwischen dem Kühlluftstrom und der Betriebsströmung in Umfangsrichtung des Lüfterrings gleichartige, insbesondere im Wesentlichen symmetrische, Strömungsverhältnisse ergeben, die insbesondere eine nahezu exakte Ausrichtung des Kühlluftstroms in axialer Richtung ermöglichen. Ein geeigneter Lüfterring ist beispielsweise in EP 2 333 349 A1 beschrieben.

Die mindestens eine Ausstoßöffnung des Lüfterrings kann mit dem Innenraum des Lüfterrings und dem radial innerhalb des Lüfterrings vorgesehenen Volumen kommunizieren, wodurch eine strömungstechnische Wechselwirkung der Betriebsströmung mit dem radial innerhalb des Lüfterrings vorgesehenen Volumen zur Erzeugung des Kühlluftstroms erreich werden kann. Insbesondere sind mehrere, beispielsweise kreisförmige oder schlitzförmige, Ausstoßöffnungen in Umfangsrichtung des Lüfterrings, vorzugsweise gleichmäßig verteilt, vorgesehen. Alternativ ist genau eine in Umfangsrichtung schlitzförmig verlaufende Ausstoßöffnung vorgesehen, die vorzugsweise in Umfangsrichtung durchgängig geschlossen ausgeführt ist. Die mindestens eine Ausstoßöffnung ist insbesondere in der inneren Mantelfläche des Lüfterrings und/oder in einem Übergangsbereich eine entgegen der Strömungsrichtung des Kühlluftstroms weisenden Stirnseite des Lüfterrings mit der inneren Mantelfläche des Lüfterrings vorgesehen. Ein Normalvektor der Ausstoßöffnung kann zumindest mit einem Anteil in radialer Richtung nach innen, beispielsweise ausschließlich nach radial innen, weisen. Vorzugsweise weist der Normalvektor der Ausstoßöffnung mit einem Anteil nach radial innen und mit einem anderen Anteil entlang der Strömungsrichtung des Kühlluftstroms in axialer Richtung. Die Betriebsströmung kann dadurch die Ausbildung einer Grenzschicht verhindern oder zumindest verringern, indem die anderenfalls die Grenzschicht ausbildende Luft aus dem radial innerhalb des Lüfterrings vorgesehenen Volumen in den Innenraum des Lüfterrings von der über die Ausstoßöffnung austretende Luft der Betriebsströmung mitgerissen wird. Eine Konzentration der Strömungslinien des Kühlluftstroms in einem radial inneren Bereich kann dadurch vermieden oder zumindest reduziert werden. Es ist sogar möglich, dass die Strömungslinien des Kühlluftstroms bei einem Passieren des Lüfterrings nach radial außen auseinandergehen, wodurch ein entsprechend hoher Unterdruck am Lüfterring erzeugt werden kann, der einen entsprechend erhöhten Massenstrom für den Kühlluftstrom durch einen entsprechend höheren Anteil infolge des Saugstrahleffekts mitgerissener Luft ermöglicht.

Die Betriebsströmung kann insbesondere von einer mit dem Innenraum kommunizierenden Eingangsöffnung des Lüfterrings zu der mit dem inneren Volumen kommunizierenden Ausstoßöffnung des Lüfterrings strömen. In Umfangsrichtung des Lüfterrings kann in einem Umfangswinkelbereich ein Teilvolumenstrom der Betriebsströmung über die Ausstoßöffnung, in das radial innere Volumen, vorzugsweise im Wesentlichen tangential, einströmen. Dadurch erzeugt die Betriebsströmung durch den Saugstrahleffekt einen ausreichend hohe Druck, um an der Ausstoßöffnung ein Teil des radial innerhalb des Lüfterrings vorgesehenen Volumens mitzureisen, welches wiederum weiteres Volumen mitreist. Die von der Betriebsströmung über die Ausstoßöffnung ausgestoßene Luft kann über den Saugstrahleffekt weitere Luft ansaugen, die sich mit der über die Ausstoßöffnung ausgestoßene Luft des Betriebsströmung verbindet und zu einem Teil des gemeinsam ausgebildeten Kühlluftstroms wird. Der in Umfangsrichtung des Lüfterrings strömende Anteil der Betriebsströmung, der in dem betrachteten Umfangswinkelbereich nicht über die Ausstoßöffnung den Innenraum des Lüfterrings verlasst, kann insbesondere einen im Wesentlichen spiralförmigen Strömungsweg in Umfangsrichtung nehmen, so dass ein an einer Innenseite des Lüfterrings entlangströmender Anteil der Betriebsströmung mit einer möglichst hohen Strömungsgeschwindigkeit und/oder nahezu parallel zum Normalvektor der Ausstoßöffnung die Ausstoßöffnung durchströmen kann.

Der Kühlluftstrom kann unter einem Winkel und/oder im Wesentlichen senkrecht auf der Außenseite des Getriebegehäuseteils auftreffen und durch konvektive Wärmeübertragung eine Wärmemenge des aufgeheizten Getriebegehäuseteils aufnehmen und abführen. Das erwärmte Getriebegehäuseteil kann dadurch gekühlt werden und weitere im Getriebe erzeugte Wärme aufnehmen. Insbesondere kann der Kühlluftstrom an der Außenseite des Getriebegehäuseteil turbulente Verwirbelungen erzeugen, die eine konvektive Wärmeabfuhr erleichtern.

Das Getriebegehäuseteil kann im Inneren des Getriebes vorgesehene rotierender Getriebeelemente, insbesondere Wellen und/oder Zahnräder, abdecken. Das Getriebegehäuseteil kann beispielsweise als ein eine Getriebeöffnung des Getriebegehäuse abdeckender Getriebedeckel ausgestaltet sein. Beispielsweise wird durch das Getriebegehäuseteil eine gesamte Seitenfläche eines auf einer Quaderform basierenden Getriebegehäuses ausgebildet. Das Getriebegehäuseteil kann auch eine Schale, insbesondere eine Oberschale und/oder eine Unterschale des Getriebegehäuses, und/oder einen ringförmigen Gehäuserahmen ausbilden. Es ist auch möglich, dass die von dem Kühlluftstrom anströmbare Außenseite von mehr als einem Getriebegehäuseteil ausgebildet ist. Das Getriebegehäuse, das mit Hilfe des mindestens einen Getriebegehäuseteil ausgebildet sein kann, kann insbesondere ein Kühlmedium und/oder Schmiermedium, beispielsweise Öl, enthalten. Bei der Drehmomentübertragung in dem Getriebe entstehende Wärme kann von dem Medium aufgenommen werden, wodurch sich das Medium erwärmt. Das Medium wiederum kann von den rotierenden Getriebeelementen an das Getriebegehäuse bewegt werden, wo das Medium die aufgenommene Warme an das Getriebegehäuse und das gekühlte Getriebegehäuseteil übertragen kann. Das von dem Kühlluftstrom gekühlte Getriebegehäuseteil kann einen ausreichend großen Temperaturgradient bereitstellen, dass die von dem Medium aufgenommene Wärme an das Getriebegehäuseteil und von dort an den Kühlluftstrom abgeführt werden kann. Das Getriebegehäuseteil ist insbesondere aus einem metallischen Material, insbesondere einem Gusswerkstoff, beispielsweise GJL 200, hergestellt, so dass das Getriebegehäuseteil einen entsprechen hohen Wärmeleitkoeffizienten aufweisen kann.

Das radial innerhalb des Lüfterrings vorgesehenen Volumen ist vorzugsweise lüftereinbautenfrei. Das heißt, radial innerhalb des Lüfterrings ist kein mit dem Lüfterring verbundenes Bauteil vorgesehen, das einen Betrag zur Förderung des Kühlluftstroms leistet. Besonders bevorzugt ist das radial innerhalb des Lüfterrings vorgesehenen Volumen einbautenfrei, das heißt auch andere nicht mit dem Lüfterring zusammenwirkende Einbauten sind nicht vorgesehen. Insbesondere entspricht der minimale Strömungsquerschnitt des Kühlluftstroms im Wesentlichen einer minimalen von dem Lüfterring begrenzten Öffnungsfläche. Das radial innerhalb des Lüfterrings vorgesehenen Volumen ist in radialer Richtung durch den Lüfterring und in axialer Richtung durch das jeweilige axiale Ende des Lüfterrings begrenzt. Das radial innerhalb des Lüfterrings vorgesehenen Volumen kann in beiden axialen Richtungen mit weiteren Volumina kommunizieren, so dass ein eingangsseitiges Ansaugen und ausgangsseitiges Ausstoßen des Kühlluftstroms mit einem möglichst geringen Strömungswiderstand möglich ist.

Insbesondere ist das Förderelement ausgestaltet Luft aus einer zu einer Strömungsrichtung des Kühlluftstroms um einen Winkel α versetzen Anströmrichtung anzusaugen, wobei insbesondere 45° ≤ α ≤ 135°, vorzugsweise 60° ≤ α ≤ 120° und besonders bevorzugt α = 90° ± 5° gilt. Vorzugsweise ist die Anströmrichtung der von dem Förderelement angesagten Luft und die Strömungsrichtung des den Lüfterring verlassenden Kühlluftstroms im Wesentlichen horizontal ausgerichtet. Das Förderelement kann dadurch Umgebungsluft für die Betriebsströmung im Lüfterring aus einem Volumen ansaugen, das von dem Volumen verschieden ist, aus dem die aus der Ausstoßöffnung austretende Strömung des Kühlluftstroms über den Saugstrahleffekt Umgebungsluft mitreist. Eine Beeinträchtigung des Kühlluftstroms durch die vom Förderelement angesaugte Luft kann dadurch vermieden werden, wodurch ein entsprechend großer Volumenstrom für den Kühlluftstrom erreicht werden kann. Beispielsweise kann bei einem im Wesentlichen quaderförmigen Getriebegehäuse das Förderelement Luft an einer langen Seite des Getriebegehäuses ansaugen und an den an einer kurzen Seite des Getriebegehäuses vorgesehenen Lüfterring fördern, der den Kühlluftstrom um ca. 90° versetzt zur Anströmrichtung der von dem Förderelement angesaugten Luft im Wesentlichen frontal auf die kurze Seite zu leitet und einen Anteil des Kühlluftstroms im Wesentlichen parallel an den beiden langen Seiten und/oder einer Oberseite des Getriebegehäuses entlang leitet. Dadurch kann eine entsprechend hohe Kühlleistung erreicht werden.

Vorzugsweise ist der Lüfterring zu der Außenseite des Getriebegehäuseteils in axialer Richtung des Lüfterrings über einen Zwischenraum beabstandet positioniert, wobei der Lüfterring über mindestens einen den Zwischenraum überbrückenden Befestigungsbolzen mit dem Getriebegehäuseteil verbunden ist, wobei der Kühlluftstrom an der Außenseite des Getriebegehäuseteils in den Zwischenraum zur Abfuhr aufgenommener Warme umlenkbar ist. Durch den Zwischenraum zwischen dem Lüfterring und dem Getriebegehäuse kann der Kühlluftstrom abgeführt werden und eine Stauströmung vermieden werden. Da die auf den Lüfterring einwirkenden Kräfte eher gering sind, kann der mindestens eine Befestigungsbolzen, der vorzugsweise als Stufenbolzen ausgebildet ist, entsprechend klein ausgestaltet sein, so dass ein durch den Befestigungsbolzen bereitgestellter Strömungswiderstand entsprechend gering oder sogar vernachlässigbar sein kann. Die axiale Erstreckung des Zwischenraums und die damit korrespondierende axiale Erstreckung des Befestigungsbolzens kann im Wesentlichen auf Grundlage der einzustellenden Strömungsverhältnisse des Kühlluftstroms ausgelegt sein.

Besonders bevorzugt ist der mindestens eine Befestigungsbolzen in radialer Richtung des Lüftungsrings gerundet, insbesondere tropfenförmig, oder keilförmig ausgeformt, insbesondere zur Bereitstellung einer für den umgelenkten Kühlluftstrom aerodynamisch günstigen Formgebung. Der Strömungswiderstand des mindestens einen Befestigungsbolzens kann dadurch minimiert werden, wodurch ein in axialer Richtung besonders enger Zwischenraum erreicht werden kann. Der Bauraumbedarf kann dadurch weiter gesenkt werden.

Insbesondere weist die Außenseite des Getriebegehäuseteils Umlenkelemente zur Umlenkung und/oder Aufteilung des in einer axialen Richtung des Lüfterrings ankommenden Kühlluftstroms in mindestens eine, insbesondere in mehrere, radiale Richtung des Lüfterrings auf, wobei insbesondere die Umlenkelemente durch gerundete Vertiefungen und/oder gerundete Erhebungen in dem Getriebegehäuseteil ausgebildet sind. Die Umlenkelemente können insbesondere einstückig mit dem Getriebegehäuseteil durch eine entsprechende Formgestaltung des Getriebegehäuseteils ausgestaltet sein. Die dreidimensionale Formgebung des Getriebegehäuseteils im Bereich der Außenseite kann eine definierte Umlenkung des Kühlluftstroms mit einem entsprechend geringen Strömungswiderstand erreichen. Dadurch kann zwischen dem Kühlluftstrom und der Außenseite ein besonders hoher Temperaturgradient aufrechterhalten werden, der eine hohe Wärmeabfuhrrate ermöglicht. Insbesondere wenn das Getriebegehäuseteil durch Metallguss hergestellt wird, kann mit Hilfe einer entsprechenden Gießform die dreidimensionale Gestaltung der Außenseite mit gerundeten Vertiefungen und Erhebungen leicht erreicht werden. Es ist aber auch möglich die gerundeten Vertiefungen und Erhebungen des Getriebegehäuseteils durch ein Umformverfahren zu erzeugen.

Vorzugsweise ist radial außerhalb des Lüfterrings ein, insbesondere in axialer Richtung des Lüfterrings auf die Außenseite des Gehäuseteils zu über den Lüfterring hinaus abstehender, Spoiler zum Ansaugen von Luft aus einem radial außerhalb des Lüfterrings vorgesehenen Volumen von dem den Lüfterring verlassenden Kühlluftstrom vorgesehen, wobei insbesondere der Spoiler über mindestens einen Befestigungssteg an einer nach radial außen weisenden Mantelfläche und/oder einer in axialer Richtung weisenden Stirnseite des Lüfterrings verbunden ist. Der Spoiler kann insbesondere Teil einer Luftleithaube sein, mit deren Hilfe der den Lüfterring verlassende Kühlluftstrom geeignet auf das Getriebegehäuse gelenkt werden kann. Dadurch kann ein ausgangsseitig am Lüfterring auftretender Saugstrahleffekt des Kühlluftstrom verstärkt werden. Der Spoiler kann beispielsweise zwischen der äußeren Mantelfläche des Lüfterrings und dem Spoiler einen sich in Strömungsrichtung des Kühlluftstroms verjüngenden Ringspalt ausbilden, so dass das über den Ringspalt von radial außerhalb des Lüfterrings angesaugte Luftvolumen den Kühlluftstrom mit zusätzlicher kinetischer Energie versorgen und dadurch den Kühlluftstrom beschleunigen kann. Der Massenstrom des Kühlluftstrom kann dadurch vergrößert und der Kühleffekt verbessert werden.

Besonders bevorzugt erweitert sich ein Strömungsquerschnitt des Lüfterrings entlang einer Strömungsrichtung des Kühlluftstroms zur Bereitstellung eines Coandä-Effekts. Die Erweiterung des Strömungsquerschnitts des Lüfterrings ist gering genug, dass ein Abreißen des Kühlluftstroms von der inneren Mantelfläche des Lüfterrings aufgrund des Coandä-Effekts vermieden ist. Gleichzeitig ist die Erweiterung des Strömungsquerschnitts des Lüfterrings groß genug, dass ein dynamischer Druck abfallen kann, wodurch ein möglichst starker Unterdruck zum Ansaugen von Luft in das radial innerhalb des Lüfterrings vorgesehenen Volumen erzeugt werden kann.

Insbesondere ist die Außenseite des Getriebegehäuseteils im Wesentlichen senkrecht zur Strömungsrichtung des den Lüfterring verlassen Kühlluftstroms ausgerichtet. Dadurch kann im der Kühlluftstrom im Wesentlichen mit seinem gesamten Strömungsquerschnitt an der Außenseite des Getriebegehäuseteils auftreffen, so dass im Wesentlichen der gesamte Massenstrom des Kühlluftstroms einen Betrag zur Kühlung des Getriebes leisten kann und sich eine entsprechend hohe Kühlleistung einstellt.

Vorzugsweise weist das Getriebegehäuseteil mindestens eine unter einem Winkel, insbesondere von im Wesentlichen 90°, zu der Außenseite ausgerichtete weitere Außenseite auf, wobei die weitere Außenseite zumindest teilweise in einem gemeinsamen Radiusbereich radial innerhalb des Lüfterrings verlauft und/oder ein Deflektor zur Umlenkung und/oder Führung eines von der Außenseite kommenden Kühlluftstroms an die weitere Außenseite vorgesehen ist. Der Deflektor kann insbesondere einstückig mit dem Spoiler ausgestaltete sein und/oder Teil einer Luftleithaube sein, mit deren Hilfe der den Lüfterring verlassende Kühlluftstrom geeignet auf das Getriebegehäuse gelenkt werden kann. Bei einem winkelig ausgestalteten Getriebegehäuseteil kann auch die abgewinkelte weitere Außenseite von dem für die Außenseite vorgesehenen Kühlluftstrom gekühlt werden. Insbesondere wird die Außenseite im Wesentlichen frontal entlang der Normalrichtung der Außenseite und die weitere Außenseite im Wesentlichen senkrecht zur Normalrichtung der weiteren Außenseite angeströmt. Falls eine direkte Anströmung der weiteren Außenseite durch den Kühlluftstrom nicht oder nur unzureichend möglich sein sollte, ist es möglich den von der Außenseite kommenden Kühlluftstrom mit Hilfe des Deflektors an die weitere Außenseite umzulenken, um auch an der weiteren Außenseite einen Wärmeabtransport und eine Kühlung zu erreichen. Besonders bevorzugt sind die Außenseite und die weitere Außenseite einstückig ausgestaltet und Teil des selben Getriebegehäuseteils, so dass zwischen der Außenseite und der weiteren Außenseite eine guter Wärmetransport durch Wärmeleitung innerhalb des Materials des Getriebegehäuseteil möglich ist. Die Kühlleistung kann dadurch weitere verbessert werden

Besonders bevorzugt ist der Lüfterring durch ein additives Fertigungsverfahren, insbesondere 3D-Druck, hergestellt, wobei insbesondere im Innern des Lüfterrings Leitelemente zur Formung des Betriebsströmung ausgebildet sind. Durch das additive Fertigungsverfahren, bei dem insbesondere in axialer Richtung der Lüfterrings additiv aufgebrachte Schichten übereinander vorgesehen werden, kann sehr leicht eine vergleichsweise komplizierte Gestaltung des Innenraums des Lüfterrings erreicht werden. Die Formgebung des Innenraums des Lüfterrings kann strömungstechnisch an die gewünschte Strömungsform der Betriebsströmung angepasst werden. Beispielsweise können in den Innenraum hinein abstehende Leitelemente ausgebildet werden, welche unnötige Strömungswiderstände verhindern. Zudem ist es möglich den Lüfterring für eine Vielzahl unterschiedlich geformter Getriebegehäuse individuell anzupassen ohne eine entsprechend hohe Anzahl verschiedener Spritzgussformen vorzuhalten. Der Lüfterring kann auch bei einer individuellen Fertigung und/oder bei Kleinserien kostengünstig und mit wenig Lagerhaltung für die dafür erforderlichen Rohstoffe hergestellt werden.

Eine weitere Ausführungsform betrifft ein Getriebe mit einem mindestens ein Getriebegehäuseteil aufweisenden Getriebegehäuse zum Einhausen rotierender Getriebeelemente, einer Getriebekühleinrichtung, die wie vorstehend beschrieben aus- und weitergebildet sein kann, einer durch das Getriebegehäuse hindurchgeführten und mit einem rotierbaren ersten Getriebeelement verbundenen ersten Welle und einer durch das Getriebegehäuse hindurchgeführten und mit einem rotierbaren zweiten Getriebeelement verbundenen zweiten Welle, wobei das erste Getriebeelement und das zweite Getriebeelement mittelbar oder unmittelbar drehmomentübertragend gekoppelt sind, wobei insbesondere eine erste Drehachse der ersten Welle und eine zweite Drehachse der zweiten Welle im Wesentlichen rechtwinkelig zueinander ausgerichtet sind. Durch die indirekte Erzeugung des Kühlluftstroms mit Hilfe der durch das Förderelement der Getriebekühleinrichtung in dem hohlen Lüfterring erzeugten Betriebsströmung kann bei einem großen Strömungsquerschnitt des Kühlluftstroms bei einem geringen Bauraumbedarf eine gute Kühlung erreicht werden, so dass eine bauraumsparende Kühlung des Getriebes ermöglicht ist.

Insbesondere ist das Förderelement der Getriebekühleinrichtung mit der ersten Welle mechanisch gekoppelt, wobei insbesondere eine Förderrichtung des Förderelements im Wesentlichen parallel zu der ersten Drehachse der ersten Welle ausgerichtet ist. Die Energie zum Antrieb des Förderelements kann von der, insbesondere als Eingangswelle verwendeten, ersten Welle abgezweigt werden. Ein elektrischer Antrieb des Förderelement kann dadurch eingespart werden. Die Getriebekühleinrichtung kann dadurch autonom von einer elektrischen Energieversorgung betrieben werden. Zudem kann vorgesehen sein, dass im regulären Betrieb des Getriebes, in dem sich ein im Wesentlichen konstanter betriebswarmen Zustand ergibt, der von der Fördereinrichtung für die Betriebsströmung erzeugte Massenstrom proportional zu der Drehzahl der ersten Welle ist, so dass bei einer hohen Drehzahl, wenn eine hohe Wärmeerzeugung in dem Getriebe zu erwarten ist, automatisch eine hohe Kühlleistung erzeugt wird und bei einer niedrigen Drehzahl, wenn eine geringe Wärmeerzeugung in dem Getriebe zu erwarten ist, automatisch eine niedrige und energiesparende Kühlleistung erzeugt wird. Dadurch ist es möglich nur soviel mechanische Leistung von der ersten Welle für den Betrieb des Förderelements abzuzweigen, wie für eine ausreichende Kühlung erforderlich ist, so dass eine unnötige Beeinträchtigung des Wirkungsgrads des Getriebes vermieden ist. Das Förderelement kann insbesondere mit einer geeigneten Übersetzung an der ersten Welle angekoppelt sein, um für verschiedene Drehzahlbereiche der ersten Welle eine dazu korrespondierende geeignete Kühlleistung bereitstellen zu können. Besonders bevorzugt kann das Förderelement über eine Kupplungseinrichtung von der ersten Welle abgekoppelt werden, beispielsweise um in einer Anfahrphase möglichst schnell den betriebswarmen Zustand zu erreichen, in dem Wirkungsgradverluste durch ein im kalten Zustand noch zähflüssiges Öl vermieden sind. Vorzugsweise ist ein Thermoelement, beispielsweise ein Bimetall, vorgesehen, das oberhalb einer Grenztemperatur mit Hilfe der Kupplungseinrichtung das Förderelement an die erste Welle automatisch ankuppelt und unterhalb der Grenztemperatur das Förderelement automatisch abkuppelt. Das Thermoelement kann insbesondere autark, das heißt ohne externe elektrische Fremdenergie, betrieben werden.

Vorzugsweise ist die erste Welle oder die zweite Welle radial innerhalb durch den Lüfterring geführt, wobei insbesondere die durch den Lüfterring geführte Welle einen Propeller zur Beschleunigung des Kühlluftstroms entlang seiner Strömungsrichtung aufweist. Zwischen der durch den Lüfterring geführten Welle und dem Lüfterring verbleibt ein im Wesentlichen ringförmiges Volumen, das für die Erzeugung des Kühlluftstroms genutzt werden kann. Da es sich bei der Welle um ein rotierendes Bauteil handelt, kann der drehfest mit der Welle verbundenen Propeller die Erzeugung des Kühlluftstroms unterstützen. Der Kühlluftstrom kann dadurch auf eine Durchführung der Welle durch das Getriebegehäuse gerichtet sein, so dass eine gute Kühlung auch im Bereich eines die Welle lagernden Lagers, insbesondere Wälzlager, erreicht ist.

Besonders bevorzugt weist das Getriebegehäuse eine kurze Seitenfläche und eine lange Seitenfläche auf, wobei der Lüfterring an der kurzen Seitenfläche und das Förderelement an der langen Seitenfläche vorgesehen ist. Das Getriebegehäuse kann insbesondere auf einem quaderförmigen Grundkörper beruhen, wobei insbesondere die kurze Seitenfläche und die lange Seitenfläche im Wesentlichen rechtwinkelig zueinander ausgerichtet sein. Insbesondere sind die kurze Seitenfläche und die lange Seitenfläche in einem gemeinsamen vertikalen Höhenbereich vorgesehen und/oder weisen eine im Wesentlichen gleiche Erstreckung in einer vertikalen Höhenrichtung auf. Die lange Seitenfläche kann eine längere Erstreckung in horizontaler Richtung als die kurze Seitenfläche aufweisen. Der an der kurzen Seitenfläche angeströmte Kühlluftstrom kann zumindest zu einem Teil im Wesentlichen frontal auf die kurze Seitenfläche auftreffen und/oder zu einem anderen Teil im Wesentlichen in horizontaler Richtung an der langen Seitenfläche entlangströmen, ohne dass der den Lüfterring verlassene Kühlluftstrom durch die von dem Förderelement angesaugte Luft beeinträchtigt wird. Dadurch ist eine hohe Kühlleistung erreicht.

Insbesondere ist eine Seitenfläche des Getriebegehäuses durch mehr als ein Getriebegehäuseteil ausgebildet. Beispielsweise kann eine der Seitenflächen, insbesondere eine Seitenfläche, an welcher der Lüfterring vorgesehen ist, durch zwei Getriebegehäuseteile ausgebildet sein. Insbesondere ist die von dem Kühlluftstrom im Wesentlichen frontal angeströmte Seitenfläche durch eine untere Gehäuseschale und eine obere Gehäuseschale des Getriebegehäuses ausgebildet. Zusätzlich oder alternativ kann an einer Seitenfläche ein Getriebegehäuseteil mit einer Öffnung vorgesehen sein, die von einem durch eine weiteres Getriebegehäuseteil ausgebildeten Deckel verschlossen ist. Selbst wenn zwischen den mindestens zwei Getriebegehäuseteilen, beispielsweise aufgrund einer zwischen den Getriebegehäuseteilen vorgesehenen Dichtung, ein thermischer Widerstand gegeben ist, kann die gesamte Seitenfläche und damit auch die beiden Getriebegehäuseteile von dem Kühlluftstrom angeströmt und gekühlt werden, so dass der thermische Widerstand zwischen den Getriebegehäuseteilen die Wärmeabfuhr nicht beeinträchtigt.

Ein weiterer Aspekt der Erfindung betrifft eine Industrieapplikation. Die Industrie-Applikation kann ein Antriebsmittel aufweisen, das beispielsweise als elektrische Maschine, Brennkraftmaschine oder Hydraulikmotor ausgestaltet sein kann. Das Antriebsmittel kann mit einem Getriebe zur Wandlung eines Drehmoments und einer Drehzahl der von dem Antriebsmittel erzeugten Leistung gekoppelt sein, wobei das Getriebe wie vorstehend beschrieben aus- und weitergebildet sein kann. Das Getriebe der Industrie-Applikation kann wiederum drehmomentübertragend mit einer mechanischen Anwendung gekoppelt sein, in der über das Getriebe eingeleitete mechanische Energie genutzt werden kann. Bei der mechanischen Anwendung handelt es sich beispielsweise um ein Förderband, mit dessen Hilfe einem Zerkleinerer recyclingfähige Materialen aus, gegebenenfalls zuvor getrennten und/oder sortierten, Abfallen oder Ähnliches, zugeführt werden können. Durch die indirekte Erzeugung des Kühlluftstroms mit Hilfe der durch das Förderelement der Getriebekühleinrichtung in dem hohlen Lüfterring erzeugten Betriebsströmung kann bei einem großen Strömungsquerschnitt des Kühlluftstroms bei einem geringen Bauraumbedarf eine gute Kühlung erreicht werden, so dass eine bauraumsparende Kühlung der Industrieapplikation ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische perspektivische Ansicht eines Getriebes,
Fig. 2: eine schematische perspektivische Vorderansicht auf einen Lüfter einer Getriebekühleinrichtung für das Getriebe aus Fig. 1,
Fig. 3: eine schematische perspektivische Ruckansicht auf den Lüfter aus Fig. 2 und
Fig. 4: eine schematische geschnittene Detailansicht eines 5 Lüfterrings der Getriebekühleinrichtung aus Fig. 2 und Fig. 3.

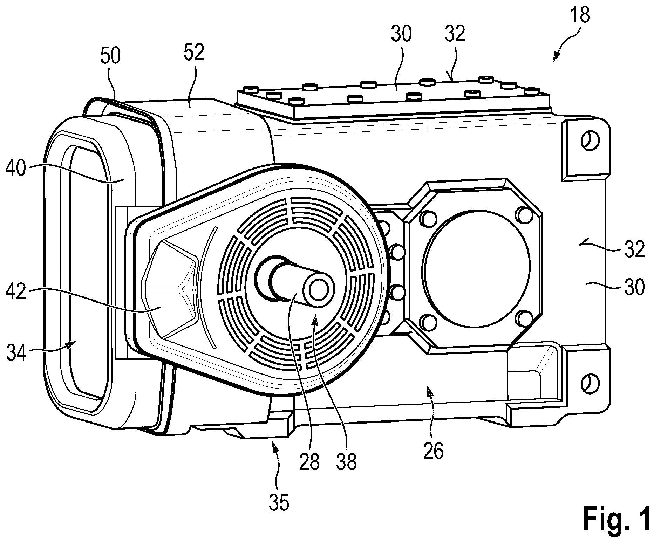

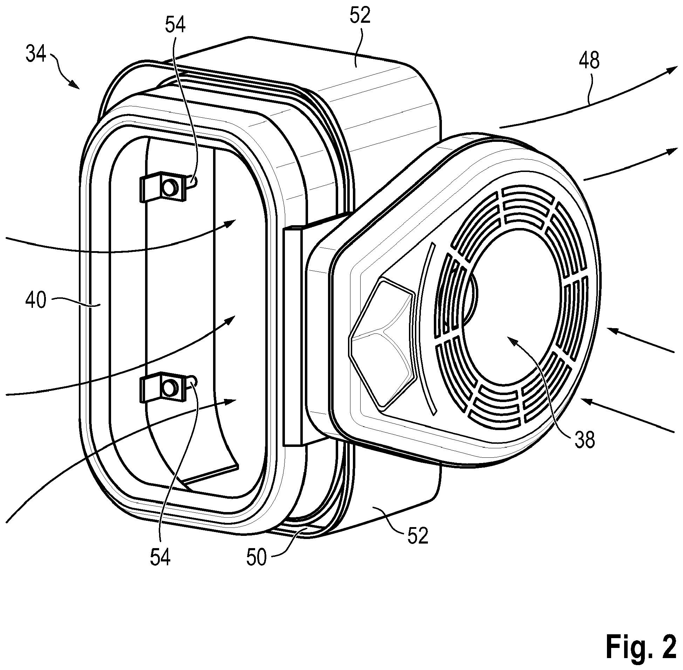

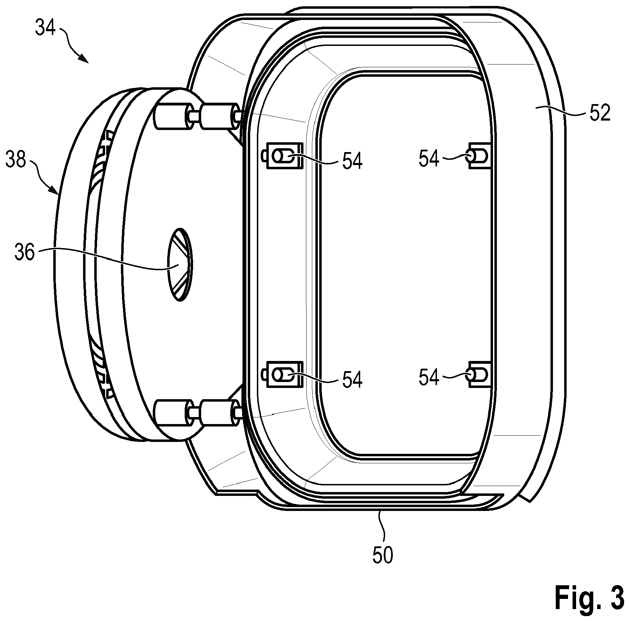

Das in Fig. 1 dargestellte Getriebe 18 weist ein Getriebegehäuse 26 auf, durch das eine beispielsweise als Eingangswelle ausgestaltete erste Welle 28 eintreten kann und eine als Ausgangswelle ausgestaltete zweite Welle austreten kann. Das Getriebegehäuse 26 weist mehrere miteinander verbundene Getriebegehäuseteile 30 auf, die jeweils eine vom Inneren des Getriebegehäuse 26 wegweisende Außenseite 32 aufweisen. Beispielsweise sind die Getriebegehäuseteile 30 als untere Gehauseschale, obere Gehäuseschale, seitlicher Lagerdeckel und obere Inspektionsdeckel ausgestaltet. Im dargestellten Ausführungsbeispiel ist ein einteiliges Getriebegehäuse dargestellt. Beispielsweise an einem Getriebegehäuseteil 30, das zumindest einen Teil einer kurzen Seitenfläche des Getriebegehäuses 26 ausbildet, ist ein in Fig. 2 und Fig. 3 näher dargestellte Lüfter 34 vorgesehen, der zusammen mit dem von dem Lüfter 34 angeströmten Getriebegehäuseteil 30 eine Getriebekühleinrichtung 35 ausbildet. Die kurze Seitenfläche des Getriebegehäuses 26 kann durch die untere Gehäuseschale und die obere Gehäuseschale zweiteilig zusammengesetzt sein, wobei im dargestellten Ausführungsbeispiel die kurze Seitenfläche einteilig ausgestaltet ist.

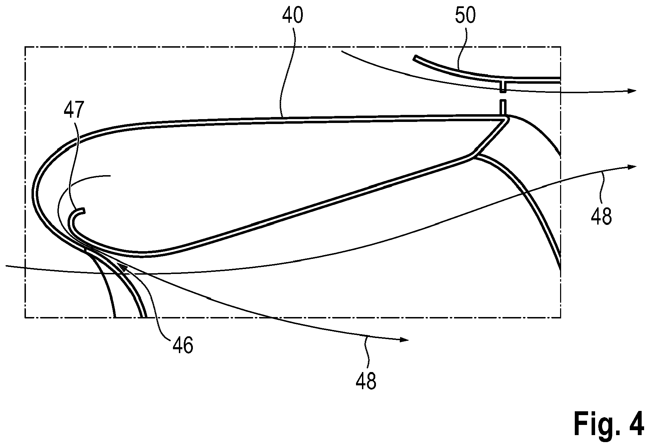

Der Lüfter 34 kann ein Förderelement 36 aufweisen, das beispielsweise als Förderrad eines Axial-Radiallüfters 38 ausgestaltet ist, der Umgebungsluft mit einer im Wesentlichen frontal auf eine lange Seitenfläche des Getriebegehäuses 26 gerichteten Anströmrichtung ansaugen kann. Das Förderelement 36 kann insbesondere von der ersten Welle 28 rein mechanisch angetrieben sein. Das Förderelement 36 kann die angesaugte Luft über einen ersten Verbindungskanal 38 und/oder einen zweiten einem Verbindungskanal 42 dem hohlen Lüfterring 40 zuführen. Wie in Fig. 4 dargestellt ist, kann die in dem hohlen Lüfterring 40 erzeugte Betriebsströmung bei einem Austritt über eine Ausstoßöffnung 46 durch einen Saugstrahleffekt einen Kühlluftstrom 48 erzeugen. Die Ausstoßöffnung 46 ist insbesondere als ein in Umfangsrichtung des Lüfterrings 40 durchgängiger Ringspalt ausgestaltet. Der Lüfterring 40 kann sich in Strömungsrichtung leicht aufweiten, um einen Coandä-Effekt des Kühlluftstroms 48 an dem Lüfterring 40 zu erzeugen. Mit Hilfe eines Spoilers 50 kann der Kühlluftstrom 48 über den Saugstrahleffekt auch Luft radial außerhalb des Lüfterrings 40 ansaugen. Der Kühlluftstrom 48 kann im Wesentlichen frontal auf die Außenseite 32 des in dem Strömungsweg des Kühlluftstroms 48 vorgesehenen Getriebegehäuseteils 30 zugeleitet werden, um im Getriebe 18 entstandene Wärme abzuführen. Der Kühlluftstrom 48 kann von der Außenseite 32 des Getriebegehäuseteils 30 im Wesentlichen um 90° in radialer Richtung umgelenkt werden und vorzugsweise mit Hilfe mindestens eines Deflektors 52 an eine andere Außenseite 32 eines anderen Getriebegehäuseteils 30, das beispielsweise an der Oberseite und/oder an einer Langseite des Getriebegehäuses 26 vorgesehen ist, gelenkt werden. Der Deflektor 52 kann sich insbesondere an dem Spoiler 50 anschließen und/oder einstückig mit dem Spoiler 50 ausgestaltet sein. Der Spoiler 50 und der Deflektor 52 können gemeinsam eine Luftleithaube ausbilden, mit deren Hilfe der Kühlluftstrom 48 an den langen Außenseiten des Getriebegehäuses 26 entlangströmen kann.

Wie in Fig. 2 und Fig. 3 dargestellt ist, kann der Lüfterring 40 über als Verschraubung ausgestaltete Befestigungsbolzen 54 an der Außenseite 32 des zugeordneten Getriebegehäuseteils 30 befestigt werden. Mit Hilfe der Befestigungsbolzen 54 kann auch ein axialer Abstand des Lüfterrings 40 zu dem Getriebegehäuseteils 30 vorgegeben werden, um einen Zwischenraum zwischen dem Lüfterring 40 und dem Getriebegehäuseteil 30 vorzusehen, über den der Kühlluftstrom 48 von dem gekühlten Getriebegehäuseteil 30 abgeführt werden kann.

## Patentansprüche

1. Getriebekühleinrichtung (35) mit
einem Getriebegehäuseteil (30) zum Einhausen rotierender Getriebeelemente und einem mit dem Getriebegehäuseteil (30) verbundenen Lüfter (34) zum Anströmen eines Kühlluftstroms (48) an eine Außenseite (32) des Getriebegehäuseteils (30), wobei der Lüfter (34) ein mit einem hohlen Lüfterring (40) kommunizierendes Förderelement (36) zur Erzeugung einer Betriebsströmung innerhalb des Lüfterrings (40) aufweist,
wobei der Lüfterring (40) über mindestens eine Ausstoßöffnung (46) mit einem radial innerhalb des Lüfterrings (40) vorgesehenen Volumen derart kommuniziert, dass die Betriebsströmung den Kühlluftstrom (48) über einen Saugstrahleffekt erzeugt,
wobei insbesondere ein Volumenstrom des Kühlluftstroms (48) zumindest durch einen Volumenstrom der Betriebsströmung und einem Volumenstrom der von der Betriebsströmung durch den Saugstrahleffekt mitgerissenen Umgebungsluft zusammengesetzt ist.

2. Getriebekühleinrichtung (35) nach Anspruch 1 **dadurch gekennzeichnet, dass** das Förderelement (36) ausgestaltet ist Luft aus einer zu einer Strömungsrichtung des Kühlluftstroms (48) um einen Winkel α versetzen Anströmrichtung anzusaugen, wobei insbesondere 45° ≤ α ≤ 135°, vorzugsweise 60° ≤ α ≤ 120° und besonders bevorzugt α = 90° ± 5° gilt.

3. Getriebekühleinrichtung (35) nach Anspruch 1 oder 2 **dadurch gekennzeichnet, dass** der Lüfterring (40) zu der Außenseite (32) des Getriebegehäuseteils (30) in axialer Richtung des Lüfterrings (40) über einen Zwischenraum beabstandet positioniert ist, wobei der Lüfterring (40) über mindestens einen den Zwischenraum überbrückenden Befestigungsbolzen (54) mit dem Getriebegehäuseteil (30) verbunden ist, wobei der Kühlluftstrom (48) an der Außenseite (32) des Getriebegehäuseteils (30) in den Zwischenraum zur Abfuhr aufgenommener Wärme umlenkbar ist.

4. Getriebekühleinrichtung (35) nach Anspruch 3 **dadurch gekennzeichnet, dass** der mindestens eine Befestigungsbolzen (54) in radialer Richtung des Lüftungsrings (40) gerundet, insbesondere tropfenförmig, oder keilförmig ausgeformt ist, insbesondere zur Bereitstellung einer für den umgelenkten Kühlluftstrom aerodynamisch günstigen Formgebung.

5. Getriebekühleinrichtung (35) nach Anspruch 3 oder 4 **dadurch gekennzeichnet, dass** die Außenseite (32) des Getriebegehäuseteils (30) Umlenkelemente zur Umlenkung und/oder Aufteilung des in einer axialen Richtung des Lüfterrings (40) ankommenden Kühlluftstroms (48) in mindestens eine, insbesondere in mehrere, radiale Richtung des Lüfterrings (40) aufweist, wobei insbesondere die Umlenkelemente durch gerundete Vertiefungen und/oder gerundete Erhebungen in dem Getriebegehäuseteil (30) ausgebildet sind.

6. Getriebekühleinrichtung (35) nach einem der Anspruche 1 bis 5 **dadurch gekennzeichnet, dass** radial außerhalb des Lüfterrings (40) ein, insbesondere in axialer Richtung des Lüfterrings (40) auf die Außenseite (32) des Gehäuseteils (30) zu über den Lüfterring (40) hinaus abstehender, Spoiler (50) zum Ansaugen von Luft aus einem radial außerhalb des Lüfterrings (40) vorgesehenen Volumen von dem den Lüfterring (40) verlassenden Kühlluftstrom (48) vorgesehen ist.

7. Getriebekühleinrichtung (35) nach einem der Anspruche 1 bis 6 **dadurch gekennzeichnet, dass** sich ein Strömungsquerschnitt des Lüfterrings (40) entlang einer Strömungsrichtung des Kühlluftstroms (48) zur Bereitstellung eines Coandä-Effekts erweitert.

8. Getriebekühleinrichtung (35) nach einem der Anspruche 1 bis 7 **dadurch gekennzeichnet, dass** die Außenseite (32) des Getriebegehäuseteils (30) im Wesentlichen senkrecht zur Strömungsrichtung des den Lüfterring (40) verlassen Kühlluftstroms (48) ausgerichtet ist.

9. Getriebekühleinrichtung (35) nach einem der Anspruche 1 bis 8 **dadurch gekennzeichnet, dass** das Getriebegehäuseteil (30) mindestens eine unter einem Winkel, insbesondere von im Wesentlichen 90°, zu der Außenseite ausgerichtete weitere Außenseite aufweist, wobei die weitere Außenseite zumindest teilweise in einem gemeinsamen Radiusbereich radial innerhalb des Lüfterrings (40) verläuft und/oder ein Deflektor (52) zur Umlenkung und/oder Führung eines von der Außenseite (32) kommenden Kühlluftstroms (48) an die weitere Außenseite vorgesehen ist.

10. Getriebekühleinrichtung (35) nach einem der Anspruche 1 bis 9 **dadurch gekennzeichnet, dass** der Lüfterring (40) durch ein additives Fertigungsverfahren, insbesondere 3D-Druck, hergestellt ist, wobei im Innern des Lüfterrings (40) Leitelemente (47) zur Formung des Betriebsströmung ausgebildet sind.

11. Getriebe (18) mit einem mindestens ein Getriebegehäuseteil (30) aufweisenden Getriebegehäuse (26) zum Einhausen rotierender Getriebeelemente, einer Getriebekühleinrichtung nach einem der Anspruche 1 bis 10, einer durch das Getriebegehäuse (26) hindurchgeführten und mit einem rotierbaren ersten Getriebeelement verbundenen ersten Welle (28) und einer durch das Getriebegehäuse (26) hindurchgeführten und mit einem rotierbaren zweiten Getriebeelement verbundenen zweiten Welle, wobei das erste Getriebeelement und das zweite Getriebeelement mittelbar oder unmittelbar drehmomentübertragend gekoppelt sind, wobei insbesondere eine erste Drehachse der ersten Welle und eine zweite Drehachse der zweiten Welle im Wesentlichen rechtwinkelig zueinander ausgerichtet sind.

12. Getriebe (18) nach Anspruch 11 **dadurch gekennzeichnet, dass** das Förderelement (36) der Getriebekühleinrichtung (35) mit der ersten Welle (28) mechanisch gekoppelt ist, wobei insbesondere eine Förderrichtung des Förderelements (36) im Wesentlichen parallel zu der ersten Drehachse der ersten Welle (28) ausgerichtet ist.

13. Getriebe (18) nach Anspruch 11 oder 12 **dadurch gekennzeichnet, dass** die erste Welle (28) oder die zweite Welle radial innerhalb durch den Lüfterring (40) geführt ist, wobei insbesondere die durch den Lüfterring (40) geführte Welle einen Propeller zur Beschleunigung des Kühlluftstroms (48) entlang seiner Strömungsrichtung aufweist.

14. Getriebe (18) nach einem der Anspruche 11 bis 13 **dadurch gekennzeichnet, dass** das Getriebegehäuse (26) eine kurze Seitenfläche und eine lange Seitenfläche aufweist, wobei der Lüfterring (40) an der kurzen Seitenfläche und das Förderelement (36) an der langen Seitenfläche vorgesehen ist.

15. Getriebe (18) nach einem der Anspruche 11 bis 14 **dadurch gekennzeichnet, dass** eine Seitenfläche des Getriebegehäuses (26) durch mehr als ein Getriebegehäuseteil (30) ausgebildet ist.
